# DEMANDE DE BREVET EUROPEEN

(11) **EP 4 682 219 A1**
(43) Date de publication de la demande: **21.01.2026**
(21) Numéro de dépôt: 25190532.9
(22) Date de dépôt: 18.07.2025
(51) Int. Cl.: C09K 5/06, F28D 20/00

(54) **PANNEAU DE GRAPHITE EXPANSÉ ET COMPRESSÉ POUR LE STOCKAGE D' ÉNERGIE THERMIQUE ET DISPOSITIF DE STOCKAGE ET D ÉCHANGE THERMIQUE COMPORTANT UN TEL PANNEAU**

(30) Priorité: 19.07.2024 FR 2407960
(71) Demandeur: Insula France, 44220 Coueron (FR)
(72) Inventeur: TRAONVOUEZ, Luc, 44880 SAUTRON (FR)
(74) Mandataire: Oak & Fox

(57) **Abrégé**

Un aspect de l'invention concerne un panneau de graphite expansé et compressé 1, dit panneau GNE, pour le stockage d'énergie thermique, le panneau GNE 1 étant imprégné d'un matériau à changement de phase, le panneau GNE 1 étant remarquable en ce qu'il comporte une pluralité d'orifices d'imprégnation 2 pour l'entrée du matériau à changement de phase durant une imprégnation en phase liquide du matériau à changement de phase, chaque orifice d'imprégnation 2 présentant un axe longitudinal X perpendiculaire à un plan de compression P du panneau GNE 1.

## Description

### DOMAINE TECHNIQUE DE L'INVENTION

La présente invention se rapporte à un panneau de graphite expansé et compressé, dit panneau GNE, pour le stockage d'énergie thermique, autrement dit de chaud ou de froid, et un dispositif de stockage ainsi que d'échange thermique muni d'au moins un tel panneau GNE. L'invention concerne par conséquent le domaine technique du stockage de l'énergie thermique.

### ARRIERE-PLAN TECHNOLOGIQUE DE L'INVENTION

Afin de stocker de l'énergie thermique pour une utilisation ultérieure, il est connu de stocker de l'énergie thermique sous forme sensible dans de l'eau. Cependant, un tel stockage d'énergie thermique est limité en température ainsi qu'en pression. Cette limite en pression est imposée par la pression du réseau de distribution d'eau et la pression admissible par le réservoir de stockage d'eau.

On connaît également un stockage sous forme thermochimique. Un tel stockage nécessite cependant l'utilisation d'enceintes de stockage dont la pression doit être maîtrisée et dont les médias se désagrègent au cours du temps.

On connait en outre le stockage d'énergie thermique sous forme latente au sein d'un matériau accumulateur de chaleur. Le document WO1998004644A1 divulgue par exemple un matériau comprenant, d'une part, une matrice en graphite expansé compressé et, d'autre part, un matériau à changement de phase comme milieu accumulateur de chaleur. La transition de phase du matériau accumulateur de chaleur peut s'effectuer par passage entre les états solide-solide, liquide-liquide ou solide-liquide. La matrice en graphite est plus particulièrement imprégnée au moyen d'un matériau à changement de phase par immersion de la matrice en graphite dans le matériau à changement de phase en phase liquide.

Une telle imprégnation n'est toutefois pas optimisée de sorte que la matrice contient une quantité de matériau à changement de phase limitée comparativement à sa capacité d'imprégnation.

### RESUME DE L'INVENTION

L'invention offre une solution au problème évoqué précédemment, en proposant un panneau de graphite expansé et compressé permettant l'imprégnation d'une quantité importante de matériau à changement de phase.

Dans ce contexte, l'invention se rapporte ainsi, dans son acceptation la plus large, à un panneau de graphite expansé et compressé, dit panneau GNE, pour le stockage d'énergie thermique, le panneau GNE étant imprégné d'un matériau à changement de phase.

Le panneau GNE selon cet aspect de l'invention est remarquable en ce qu'il comporte une pluralité d'orifices d'imprégnation pour l'entrée du matériau à changement de phase durant une imprégnation en phase liquide dudit matériau à changement de phase, les orifices d'imprégnation comportant un axe longitudinal perpendiculaire à un plan de compression du panneau GNE.

Ainsi, lorsque le panneau GNE est immergé dans un bain de matériau à changement de phase, les orifices d'imprégnation facilitent l'évacuation des gaz et l'entrée du matériau à changement de phase en phase liquide durant l'imprégnation.

En outre, comme les orifices d'imprégnation sont percés perpendiculairement à un plan de compression du panneau GNE, le phénomène de délaminage du panneau GNE est évité.

Outre les caractéristiques qui viennent d'être évoquées dans le paragraphe précédent, le panneau GNE selon cet aspect de l'invention peut présenter une ou plusieurs caractéristiques complémentaires parmi les suivantes, considérées individuellement ou selon toutes les combinaisons techniquement possibles.

Selon un aspect non limitatif de l'invention, il comporte une pluralité d'éléments d'obturation, chaque orifice d'imprégnation étant obturé par un élément d'obturation.

Ainsi, lorsque le panneau GNE est en fonctionnement, les éléments d'obturation permettent de réduire les fuites du matériau à changement de phase imprégné dans le panneau GNE.

Selon un aspect non limitatif de l'invention, le panneau GNE est formé de plusieurs lamelles de graphite expansées et compressées, les lamelles étant disposées côte à côte de sorte à former un panneau parallélépipédique, au moins une des lamelles présentant un plan de compression perpendiculaire à au moins un plan de compression d'une des autres lamelles.

Un aspect différent de l'invention se rapporte à une méthode d'imprégnation d'un panneau GNE selon l'un quelconque des aspects de l'invention précité, ladite méthode comportant une étape d'imprégnation du panneau GNE au cours de laquelle le panneau GNE est placé verticalement dans un bain de matériau à changement de phase en phase liquide, une extrémité du panneau GNE émergeant du bain lors de ladite étape d'imprégnation.

Un autre aspect de l'invention concerne un dispositif de stockage et d'échange thermique comportant un ensemble de stockage et d'échange thermique muni :
- D'un premier panneau GNE selon l'un quelconque des aspects de l'invention précités ;
- D'un premier échangeur de chaleur plan ayant une première surface d'échange thermique au contact d'une première surface principale du panneau GNE.

Selon un aspect non limitatif de l'invention, le dispositif comporte :
- Une première plaque de maintien au contact d'une deuxième surface principale du premier panneau GNE parallèle à la première surface principale ;
- Une pluralité de tiges, chaque tige étant insérée dans un orifice de maintien traversant l'ensemble de stockage et d'échange thermique et la première plaque de maintien, une première extrémité de chacune desdites tiges étant soudée au premier échangeur de chaleur plan et une deuxième extrémité de chacune desdites tiges comportant une tête au contact d'un élément ressort, l'élément ressort étant disposé entre la tête et la première plaque de maintien.

Selon un aspect non limitatif de l'invention, la première plaque de maintien est formée par un deuxième échangeur de chaleur plan.

Selon un aspect non limitatif de l'invention, l'ensemble de stockage et d'échange thermique comporte en outre un deuxième panneau GNE, le premier échangeur de chaleur plan ayant une deuxième surface d'échange thermique au contact d'une première surface principale du deuxième panneau GNE parallèle à la première surface principale du premier panneau GNE, le dispositif comportant en outre :
- Une première plaque de maintien au contact d'une deuxième surface principale du premier panneau GNE parallèle à la première surface principale du premier panneau GNE ;
- Une deuxième plaque de maintien au contact d'une deuxième surface principale du deuxième panneau GNE parallèle à la première surface principale du deuxième panneau GNE ;
- Une pluralité de tiges, chaque tige étant insérée dans un orifice de maintien traversant l'ensemble de stockage et d'échange thermique ainsi que les première et deuxième plaques de maintien, une première extrémité de chacune des tiges étant soudée à la deuxième plaque métallique et une deuxième extrémité de chacune des tiges comportant une tête au contact d'un élément ressort, ledit élément ressort étant disposé entre la tête et la première plaque de maintien.

Selon un aspect non limitatif de l'invention, l'ensemble de stockage et d'échange thermique comporte en outre un deuxième échangeur de chaleur plan ayant une première surface d'échange thermique au contact d'une deuxième surface d'échange thermique du premier échangeur de chaleur plan, le dispositif comportant en outre :
- Une première plaque de maintien au contact d'une deuxième surface principale du premier panneau GNE parallèle à la première surface principale du premier panneau GNE ;
- Une pluralité de tiges, chaque tige étant insérée dans un orifice de maintien traversant l'ensemble de stockage et d'échange thermique et la première plaque de maintien, une première extrémité de chacune des tiges étant soudée au deuxième échangeur de chaleur plan et une deuxième extrémité de chacune des tiges comportant une tête au contact d'un élément ressort, ledit élément ressort étant disposé entre la tête et la première plaque de maintien.

Selon un aspect non limitatif de l'invention, chaque orifice de maintien est ménagé dans une lamelle dont le plan de compression est perpendiculaire à l'axe longitudinal de l'orifice de maintien.

Selon un aspect non limitatif de l'invention, chaque échangeur de chaleur plan est formé d'une plaque plane d'échange thermique et d'une plaque embossée d'échange thermique posées l'une sur l'autre et formant entre elles au moins un conduit d'acheminement d'un fluide caloporteur.

Selon un aspect non limitatif de l'invention, le dispositif de stockage comprend un empilement, selon une direction d'empilement, d'un échangeur de chaleur plan d'un premier empilement de plusieurs panneaux GNE et d'un deuxième empilement de plusieurs panneaux GNE, l'échangeur de chaleur plan étant interposé entre le premier empilement de plusieurs panneaux GNE et le deuxième empilement de plusieurs panneaux GNE selon la direction d'empilement. L'échangeur de chaleur plan comprend une première surface d'échange thermique au contact d'une première surface principale d'un des panneaux GNE du premier empilement et une deuxième surface d'échange thermique au contact d'une première surface principale d'un des panneaux GNE du deuxième empilement.

Ce dispositif de stockage peut comprendre une plaque métallique de maintien ou deux plaques métalliques de maintien entre lesquelles est interposé l'empilement selon la direction d'empilement ou être dépourvu de plaque métallique de maintien.

Ce dispositif de stockage peut comprendre une pluralité de tiges, chaque tige étant insérée dans un orifice de maintien traversant l'empilement ainsi que la ou les éventuelles plaques de maintien, une première extrémité de chacune desdites tiges étant soudée ou fixée à une de la ou des éventuelles plaques de maintien ou soudée ou fixée un des panneaux GNE du premier ou du deuxième empilement et et une deuxième extrémité de chacune desdites tiges comportant une tête au contact d'un élément ressort, ledit élément ressort étant disposé entre ladite tête et une éventuelle plaque de maintien ou un autre des panneaux GNE.

Selon un aspect non limitatif de l'invention, un produit de remplissage présentant une conductivité thermique supérieure à 6W/m/K est disposé entre :
- Un panneau GNE et un échangeur de chaleur plan ; et/ou
- Un panneau de GNE et une plaque de maintien.

Selon un aspect non limitatif de l'invention, le produit de remplissage est formé par broyage et compactage d'un panneau GNE mélangé à :
- Une graisse de contact ;
- Une graisse thermique ;
- Un mélange d'alliage ; ou
- Un mélange de métal.

Selon un aspect non limitatif de l'invention, le dispositif comporte un élément chauffant disposé au contact d'un panneau GNE ou d'un panneau GNE et d'un échangeur de chaleur plan. L'élément chauffant est par exemple de type électrique et utilise le principe de chauffage par effet joule.

Selon un aspect non limitatif de l'invention, au moins un panneau GNE est disposé dans une enveloppe sous vide.

Selon un mode de réalisation, le stock comprend des panneaux GNE placés dans des enveloppes sous vide, qui sont elles-mêmes placées entre deux tôles avec un pourtour étanche formant une enceinte sous vide.

Un autre aspect de l'invention se rapporte à un système de stockage et d'échange thermique comportant :
- Un circuit d'acheminement d'un fluide caloporteur muni d'au moins deux canalisations connectées en parallèles, chaque canalisation étant munie d'une électrovanne agencée pour autoriser ou interdire la circulation d'un fluide caloporteur dans ladite canalisation, une des au moins deux canalisations comportant un dispositif de stockage et d'échange thermique selon l'un quelconque des aspects de l'invention précités ;
- Un dispositif de mesure de température d'un fluide caloporteur circulant dans le circuit ;
- Des moyens de pilotage, les moyens de pilotage étant agencés pour piloter les électrovannes en fonction d'une température du fluide caloporteur mesurée par le dispositif de mesure de température.

Selon un aspect non limitatif de l'invention, chaque canalisation est en outre munie d'une deuxième électrovanne, une desdites deux électrovannes d'une canalisation étant disposée en entrée de ladite canalisation et l'autre desdites deux électrovannes de ladite canalisation étant disposées en sortie de ladite canalisation, lesdites deux électrovannes d'une canalisation étant agencée pour autoriser ou interdire la circulation d'un fluide caloporteur dans ladite canalisation.

Un aspect différent de l'invention se rapporte à un procédé de pilotage d'un système de stockage et d'échange thermique tel que susmentionné, le procédé étant remarquable en ce qu'il comporte les étapes de :
- Mesurer, au moyen du dispositif de mesure de température, la température du fluide caloporteur ;
- En fonction de la température du fluide caloporteur mesurée,
   - Piloter l'ouverture, via les moyens de pilotage, d'une ou deux électrovanne d'une canalisation de sorte à autoriser une circulation du fluide caloporteur dans la canalisation associée à ladite ou lesdites électrovanne(s) ouverte(s), et
   - Piloter la fermeture, via les moyens de pilotage, d'une ou deux électrovanne(s) d'une autre canalisation de sorte à interdire une circulation du fluide caloporteur dans ladite autre canalisation associée à ladite ou lesdites électrovanne(s) fermée(s).

L'invention et ses différentes applications seront mieux comprises à la lecture de la description qui suit et à l'examen des figures qui l'accompagnent.

### BREVE DESCRIPTION DES FIGURES

La figure 1 illustre une vue en trois dimensions d'un exemple de réalisation d'un panneau de graphite expansé et compressé selon l'invention.
La figure 2 montre une vue en coupe d'une portion du panneau de graphite expansé et compressé illustré à la figure 1.
Les figures 3a et 3b illustrent d'autres exemples de réalisation non limitatif d'un panneau GNE selon l'invention.
La figure 4 montre un premier exemple de réalisation d'un dispositif de stockage et d'échange thermique selon l'invention.
La figure 5 illustre un deuxième exemple de réalisation d'un dispositif de stockage et d'échange thermique selon l'invention.
La figure 6 illustre un troisième exemple de réalisation d'un dispositif de stockage et d'échange thermique selon l'invention.
La figure 7 illustre un quatrième exemple de réalisation d'un dispositif de stockage et d'échange thermique selon l'invention.
La figure 8 illustre un cinquième exemple de réalisation d'un dispositif de stockage et d'échange thermique selon l'invention.
La figure 9 illustre un sixième exemple de réalisation d'un dispositif de stockage et d'échange thermique selon l'invention muni d'un élément chauffant de type électrique utilisant le principe de chauffage par effet joule.
La figure 10 illustre un panneau GNE disposé dans une enveloppe sous vide.
La figure 11 illustre un système de stockage et d'échange thermique selon l'invention.
La figure 12 illustre un exemple de mise en œuvre d'un procédé de pilotage d'un système de stockage et d'échange thermique tel que celui illustré à la figure 11 permettant de refroidir un fluide caloporteur par un transfert de chaleur du fluide caloporteur vers des dispositifs de stockage et d'échange thermique.
La figure 13 illustre un autre exemple de mise en œuvre d'un procédé de pilotage d'un système de stockage et d'échange thermique tel que celui illustré à la figure 11 permettant de chauffer le fluide caloporteur par un transfert de chaleur des dispositifs de stockage et d'échange thermique vers le fluide caloporteur.
La figure 14 illustre un système de stockage et d'échange thermique selon un autre exemple de l'invention.

La figure. 15 illustre une méthode d'imprégnation d'un panneau GNE selon l'invention.

### DESCRIPTION DETAILLEE

Les figures sont présentées à titre indicatif et nullement limitatif de l'invention.

Sauf précision contraire, un même élément apparaissant sur des figures différentes présente une référence unique.

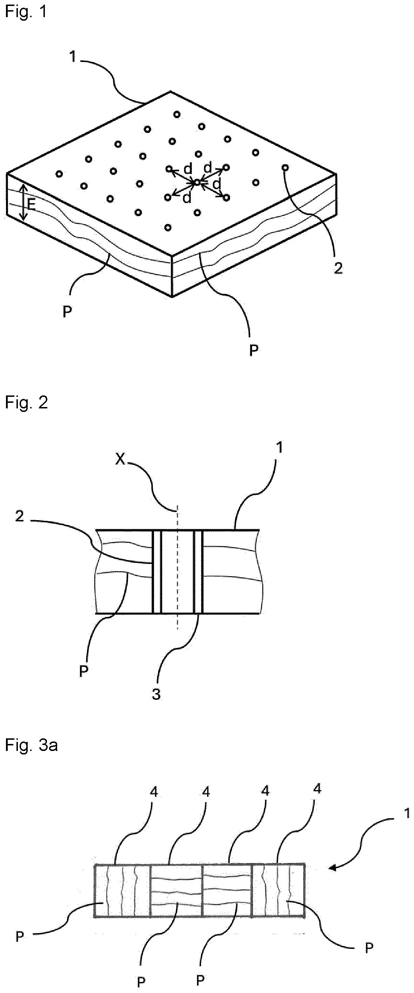

La figure 1 illustre une vue en trois dimensions d'un exemple de réalisation d'un panneau de graphite expansé et compressé 1, dit panneau GNE, selon l'invention.

Le panneau GNE 1 est imprégné d'un matériau à changement de phase et comporte une pluralité d'orifices d'imprégnation 2 pour l'entrée du matériau à changement de phase durant une imprégnation en phase liquide du matériau à changement de phase.

Comme illustré à la figure 2 montrant une vue en coupe d'une portion du panneau de GNE 1, les orifices d'imprégnation 2 présentent un axe longitudinal X perpendiculaire à un plan de compression P du panneau GNE 1.

Ces orifices d'imprégnation 2 peuvent être débouchant ou non débouchant. Ils peuvent en outre être de forme conique, cylindrique ou parallélépipédique. Ces orifices d'imprégnation 2 permettent de faciliter l'évacuation des gaz et l'entrée en phase liquide du matériau à changement de phase durant l'imprégnation.

Selon un exemple de réalisation non limitatif, les orifices d'imprégnation 2 peuvent être cylindrique, traverser l'épaisseur E du panneau GNE 1 et présenter un diamètre compris entre 1 et 2 mm.

De façon non limitative, les orifices d'imprégnation 2 peuvent être percés selon un maillage perpendiculaire et être espacés les uns des autres d'une distance d de l'ordre de 20 mm.

Selon un mode de réalisation non limitatif, le panneau GNE 1 présente une épaisseur E de 30 mm.

Comme illustré à la figure 2, chaque orifice d'imprégnation 2 peut être obturé par un élément d'obturation 3.

Par exemple, lorsque les orifices d'imprégnation 2 présentent une section circulaire, les éléments d'obturations 3 peuvent être formés par des cylindres creux insérés dans les orifices d'imprégnation 2 à la suite d'une opération d'imprégnation du matériau à changement de phase. Les éléments d'obturation 3 permettent de réduire les fuites du matériau à changement de phase imprégné dans le panneau GNE 1 lorsque le panneau GNE est en fonctionnement.

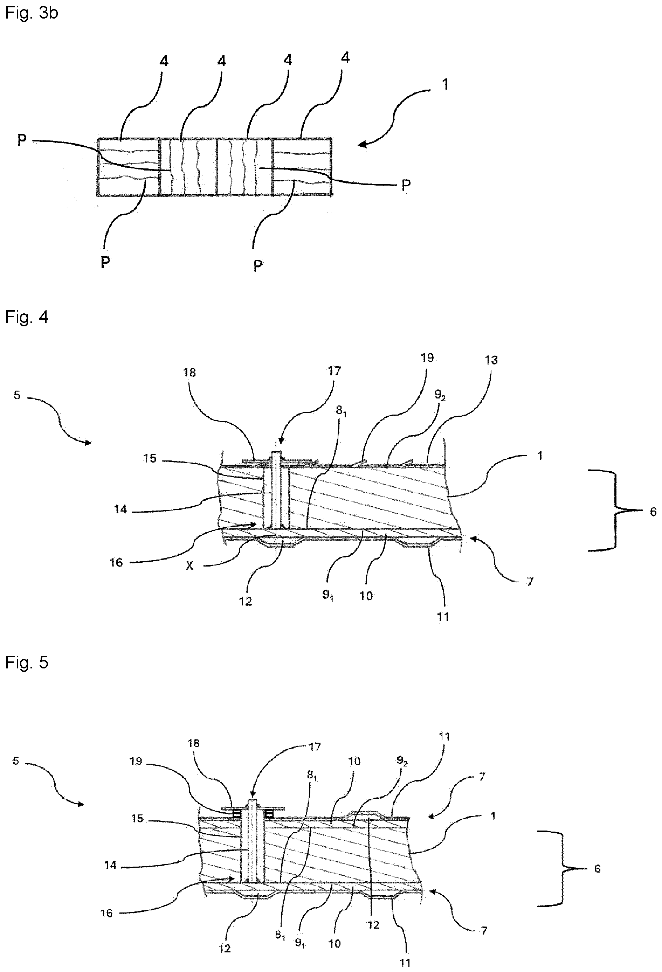

Les figures 3a, 3b, illustrent d'autres exemples de réalisation non limitatif d'un panneau GNE 1 selon l'invention.

Selon ces modes de réalisation, le panneau GNE 1 est formé de plusieurs lamelles 4 de graphite expansées et compressées imprégnées d'un matériau à changement de phase. Seulement quatre lamelles sont illustrées. Les lamelles 4 sont disposées côte à côte de sorte à former un panneau GNE 1 parallélépipédique au sein duquel deux des quatre lamelles 4 présente un plan de compression P perpendiculaire au plan de compression P des deux autres lamelles 4.

Plus particulièrement, comme illustré à la figure 1, le panneau GNE 1 comporte des plans de compression P perpendiculaires à la compression qui a été opérée pour le fabriquer à partir de graphite naturel exposé à un traitement thermochimique. La conductivité thermique selon les plans de compression P symbolisés par des traits perpendiculaires à l'épaisseur E du panneau de GNE 1, est environ trois fois plus importante que perpendiculairement à ces plans de compression P.

Ainsi, selon les modes de réalisations illustrés aux figures 3a et 3b, le panneau GNE 1 illustré à la figure 1 est coupé en lamelles 4 de largeur égale à son épaisseur E. Afin d'améliorer la conductivité thermique du panneau de GNE 1, certaines des lamelles 4 sont pivotées de 90°. Celles qui ne sont pas pivotées sont utilisées pour la fixation ultérieure du panneau GNE 1 sur un échangeur de chaleur plan.

La figure 4 illustre un dispositif de stockage et d'échange thermique 5 comportant un ensemble de stockage et d'échange thermique 6.

L'ensemble de stockage et d'échange thermique 6 est muni d"un panneau GNE 1 tel que celui illustré à la figure 1 et d'un échangeur de chaleur plan 7. L'échangeur de chaleur plan 7 possède une première surface d'échange thermique 8₁ au contact d'une première surface principale 9₁ du panneau GNE 1. Par surface principale, on entend une des deux surfaces du panneau GNE 1 dont l'aire est la plus importante.

Selon un mode de réalisation non limitatif, l'échangeur de chaleur plan 7 est formé d'une plaque plane d'échange thermique 10 et d'une plaque embossée d'échange thermique 11 posées l'une sur l'autre et formant entre elles au moins un conduit 12 d'acheminement d'un fluide caloporteur. Les plaques plane et embossée d'échange thermique 10,11 peuvent être soudées entre elles.

Selon un mode de réalisation non limitatif, l'échangeur de chaleur plan 7 présente une épaisseur de 6 mm.

Le dispositif de stockage et d'échange thermique 5 comporte en outre une plaque de maintien 13 au contact d'une deuxième surface principale 9₂ du panneau GNE1. La deuxième surface principale 9₂ du panneau GNE 1 est parallèle à la première surface principale 9₁ du panneau GNE 1.

Autrement dit, l'échangeur de chaleur plan 7 et la plaque de maintien 13 sont disposés de part et d'autre du panneau GNE 1.

Le dispositif de stockage et d'échange thermique 5 comporte en outre une pluralité de tiges 14 (une seule est représentée) de maintien du panneau GNE 1, de l'échangeur de chaleur plan 7 et de la plaque de maintien 13.

Selon un mode de réalisation non limitatif, chaque tige 14 présente un diamètre de 3mm.

Chaque tige 14 est insérée dans un orifice de maintien 15 d'axe longitudinal X perpendiculaire au plan de compression P, par exemple de diamètre 8 mm, traversant l'ensemble 6 et la plaque de maintien 13. Une première extrémité 16 de chacune des tiges 14 est soudée à l'échangeur de chaleur plan 7 et une deuxième extrémité 17 de chacune des tiges 14 comporte une tête 18 au contact d'un élément ressort 19.

La tête 18 peut être formée par une rondelle soudée à la tige 1. Une telle rondelle peut par exemple présenter un diamètre de 25mm.

L'élément ressort 19 est quant à lui disposé entre la tête 18 et la plaque de maintien 13 de sorte à maintenir le panneau GNE 1 au contact de l'échangeur de chaleur plan 7.

La plaque de maintien 13 est formée, par exemple, par une tôle en aluminium placée au contact du panneau GNE 1 et en-dessous de l'élément ressort 19. Elle empêche ainsi que l'élément ressort 19 pénètre à l'intérieur du panneau GNE 1. L'élément ressort 19 permet également d'encaisser les changements d'épaisseur E du panneau GNE 1 générés par les changements de température.

Dans l'exemple illustré, l'élément ressort 19 est intégré à la plaque de maintien 13. Plus particulièrement, la plaque de maintien 13 est formée par une plaque métallique souple comportant sur son dessus des déformations souples obtenues par découpe ou emboutissage. Ces déformations souples sont disposées sous les têtes 18 et agissent comme des ressorts de manière à plaquer le panneau GNE 1 au contact de l'échangeur de chaleur plan 7.

L'élément ressort 19 est dimensionné de sorte à exercer une force permettant de maintenir le panneau **GNE** 1 au contact de l'échangeur de chaleur plan 7, et ce malgré la dilatation du graphite sous l'effet de la chaleur et la dilation du matériau à changement de phase lors de son changement de phase.

Dans des exemples de réalisation différents, l'élément ressort 19 peut être intégré à la tête 18 ou être indépendant de la plaque de maintien 13 et de la tête 18.

La figure 5 illustre un dispositif de stockage et d'échange thermique 5 conforme à celui illustré à la figure 4, dans lequel la plaque de maintien 13 est remplacé par un deuxième échangeur de chaleur plan 7. Dans ce cas, chaque échangeur de chaleur plan 7 est formé d'une plaque plane d'échange thermique 10 et d'une plaque embossée d'échange thermique 11 posées l'une sur l'autre et formant entre elles au moins un conduit 12 d'acheminement d'un fluide caloporteur.

Par exemple, le conduit 12 d'acheminement d'un fluide caloporteur d'un des deux échangeurs de chaleur plan 7 est agencé pour transmettre la chaleur du conduit d'acheminement vers le panneau **GNE** 1 et le conduit 12 d'acheminement d'un fluide caloporteur de l'autre des deux échangeurs de chaleur plan 7 est agencé pour absorber la chaleur en provenance du panneau **GNE 1.**

Selon l'exemple non limitatif illustré, chaque élément ressort 19 est formé par un ressort de compression disposé entre une tête 18 d'une tige 14 et le deuxième échangeur de chaleur plan 7.

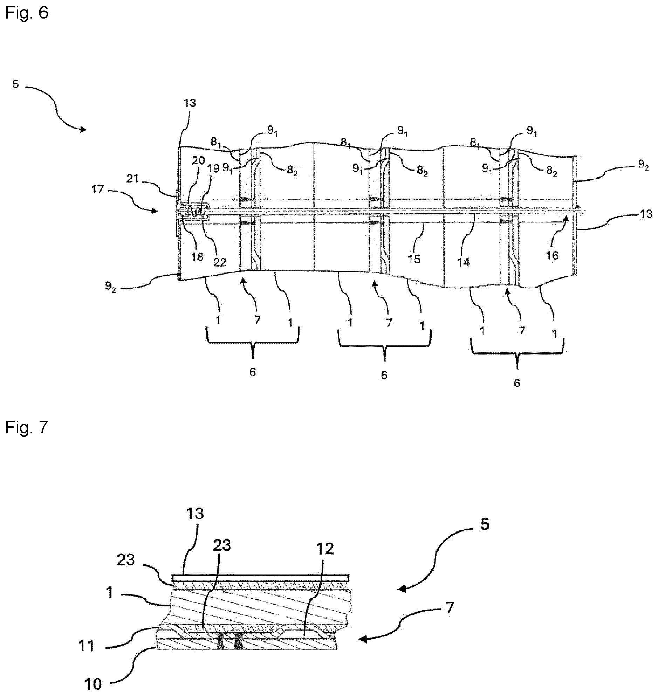

La figure 6 illustre un dispositif de stockage et d'échange thermique 5 comportant trois ensembles de stockage et d'échange thermique 6 muni d'un premier panneau GNE 1 et d'un deuxième panneau GNE 1 tel que celui illustré à la figure 1 ainsi qu'un échangeur de chaleur plan 7. Le premier panneau GNE 1 et le deuxième panneau GNE 1 étant disposés de part et d'autre de l'échangeur de chaleur plan 7.

Les trois ensemble de stockage et d'échange thermique 6 sont empilés les uns sur les autres.

Chaque échangeur de chaleur plan 7 possède une première surface d'échange thermique 8₁ au contact d'une première surface principale 9₁ du premier GNE 1 et une deuxième surface d'échange thermique 8₂ au contact d'une première surface principale 9₁ du deuxième panneau GNE 1.

Le dispositif de stockage et d'échange thermique 5 comporte en outre une première plaque de maintien 13 au contact d'une deuxième surface principale 9₂ d'un premier panneau GNE 1 situé à une extrémité de l'empilement.

Le dispositif de stockage et d'échange thermique 5 comporte en outre une deuxième plaque de maintien 13 au contact d'une deuxième surface principale 9₂ d'un deuxième panneau GNE 1 situé à l'autre extrémité de l'empilement.

Autrement dit, les première et deuxième plaques de maintien 13 sont disposés de part et d'autre de l'empilement des trois ensembles de stockage et d'échange thermique 6.

Selon un mode de réalisation non limitatif, les première et deuxième plaques de maintien 13 sont en aluminium et présentent une épaisseur de 0,5 mm.

Le dispositif de stockage et d'échange thermique 5 comporte en outre une pluralité de tiges 14 (une seule est représentée) de maintien des trois ensembles de stockage et d'échange thermique 6 et des première et deuxième plaques de maintien 13. Selon cet exemple de réalisation, chaque tige 14 traverse librement trois ensembles de stockage et d'échange thermique 6 et n'est pas soudée à un des échangeurs de chaleur plan 7. Chaque tige 14 peut passer dans un trou pratiqué au milieu de soudures circulaires qui réunissent les plaques plane d'échange thermique 10 et embossée d'échange thermique 11 de chaque échangeur de chaleur plan 7.

Chaque tige 14 est insérée dans un orifice de maintien 15, par exemple de diamètre 8 mm, traversant les trois premiers ensembles de stockage et d'échange thermique 6 et les première et deuxième plaques de maintien 13. Une première extrémité 16 de chacune des tiges 14 est soudée à la première plaque de maintien 13 et une deuxième extrémité 17 de chacune des tiges 14 comporte une tête 18 au contact d'un élément ressort 19.

Selon cet exemple de réalisation non limitatif, l'élément ressort 19 est disposé entre la tête 18 et la deuxième plaque de maintien 13 via une coupelle 20.

La coupelle 20 comporte, d'une part, une tête 21 en forme de rondelle prenant appui sur la deuxième plaque de maintien 13 et, d'autre part, un corps 22 introduit dans l'orifice de maintien 15. Dans cet exemple de réalisation non limitatif, l'élément ressort 19 est formé par un ressort de compression et est disposé dans le corps 22 de la coupelle 20.

Selon une variante à la réalisation de la figure 6, le dispositif de stockage et d'échange thermique diffère de celui de la figure 6 en ce qu'il comprend un unique ensemble de stockage et d'échange thermique qui forme un empilement et que cet ensemble de stockage et d'échange thermique comprend un premier empilement de N premiers panneaux GNE 1 et un deuxième empilement de M deuxièmes GNE tels que décrits précédemment ainsi qu'un échangeur de chaleur plan 7 tel que décrit précédemment. Les N premiers panneaux GNE et les M deuxièmes panneaux GNE sont disposés de part et d'autre de l'échangeur de chaleur plan 7. Autrement dit, les N premiers panneaux GNE, les M deuxièmes panneaux GNE 1 et l'échangeur de chaleur plan 7 sont empilés selon une direction d'empilement de sorte que l'échangeur de chaleur plan 7 est interposé, selon la direction d'empilement entre les N premiers panneaux GNE et les M deuxièmes panneaux GNE, c'est-à-dire entre le premier empilement et le deuxième empilement.

Les N premiers panneaux GNE sont empilés selon la direction d'empilement et les M deuxième panneaux GNE sont également empilés selon la direction d'empilement.

Par exemple, les N premiers panneaux GNE sont accolés deux à deux tout comme les M deuxièmes panneaux GNE 1.

M et N sont des entiers naturels supérieurs à 1. N peut être égal à M ou différent de M.

Par exemple, N=M=3.

L'échangeur de chaleur plan comprend une première surface d'échange thermique au contact d'une première surface principale d'un des panneaux GNE du premier empilement et une deuxième surface d'échange thermique au contact d'une
L'empilement peut être est interposé entre les deux plaques de maintien 13 selon la direction d'empilement.

En variante, le dispositif de stockage est dépourvu de plaque de maintien 13 ou comprend une unique plaque de maintien 13.

Par exemple, les panneaux GNE présentent une densité inférieure à 0,1.

Par exemple, chacun des panneaux **GNE** présente une longueur de 630 mm, une largeur de 620 mm et une épaisseur, prise selon la direction d'empilement, de 21 mm.

Par exemple, chacun des panneaux **GNE** comprend 28 orifices d'imprégnation 2 présentant un diamètre de 4 mm.

Les orifices d'imprégnation 2 sont par exemple réalisés en regard des points de soudage décrits ci-dessous.

L'échangeur de chaleur plan 7 présente, par exemple, une épaisseur de 4 mm selon la direction d'empilement.

La plaque plane d'échange thermique 10 présente par exemple une épaisseur de 3, 2 mm prise selon la direction d'empilement et la plaque embossée d'échange thermique 11 présente par exemple une épaisseur de 0,8 mm selon la direction d'empilement.

Les plaques plane et embossée sont par exemple soudées entre elles en plusieurs points de soudure.

Chaque point de soudure forme par exemple un disque de 10 mm.

Les points de soudure sont par exemple effectués au laser.

Le dispositif de stockage et d'échange thermique diffère en outre de celui de la figure 6 en ce qu'il comprend un produit de remplissage 23 présentant une conductivité thermique supérieure à 6W/m/K est disposé entre chacun des deux panneaux GNE les plus proches de l'échangeur plan 7 selon la direction d'empilement et l'échangeur plan 7.

Ce produit de remplissage peut être configuré et/ou disposé et/ou obtenu comme décrit ci-dessous en référence à la figure 7.

Le montage des tiges 14 peut être identique à celui décrit en référence à la figure 6 ou différer de celui de la figure 6 en ce que la première extrémité des tiges 14 est fixée à des panneaux GNE via un écrou ou une rondelle, par exemple, lorsque le dispositif est dépourvu de plaque de maintien ou comprend une unique plaque de maintien disposée du côté de la deuxième extrémité des tiges.

Lorsque le dispositif est dépourvu de plaque de maintien 13 ou lorsque cette dernière est disposée du côté de la première extrémité des tiges 14, l'élément ressort 19 est disposé entre la tête 18 et un des panneaux GNE via une coupelle 20.

La coupelle 20 comporte, d'une part, une tête 21 en forme de rondelle prenant appui sur ce dernier panneau GNE et, d'autre part, un corps 22 introduit dans l'orifice de maintien 15. Dans cet exemple de réalisation non limitatif, l'élément ressort 19 est formé par un ressort de compression et est disposé dans le corps 22 de la 22 de la coupelle 20.

Les orifices de maintien 15 peuvent comprendre les orifices d'imprégnation 2. En variante, au moins un orifice du maintien 15 est, par exemple tous les orifices de maintien sont, situé(s) à distance des orifices d'imprégnation.

Les tiges 14 sont par exemple fixées de sorte à maintenir les panneaux GNE et l'échangeur plan en appui les uns sur les autres avec une pression égale à 5 kPa, c'est-à-dire à 5 J.m⁻³.

Selon un exemple de réalisation non limitatif illustré à la figure 7 montrant un dispositif de stockage et d'échange thermique 5, l'échangeur de chaleur plan 7 est formé d'une plaque plane d'échange thermique 10 et d'une plaque embossée d'échange thermique 11 posées l'une sur l'autre et formant entre elles au moins un conduit 12 d'acheminement d'un fluide caloporteur.

Selon cet exemple non limitatif, un produit de remplissage 23 présentant une conductivité thermique supérieure à 6W/m/K est disposé entre le panneau GNE 1 et l'échangeur de chaleur plan 7.

Ce produit de remplissage 23 qui présente une conductivité thermique élevée est utilisé pour aplanir la surface irrégulière de l'échangeur de chaleur plan 7 en venant combler ses creux. La surface de contact entre le panneau de GNE 1 et l'échangeur de chaleur plan 7 est donc maximale.

Selon cet exemple non limitatif, un produit de remplissage présentant une conductivité thermique supérieure à 6W/m/K est également disposé entre le panneau GNE 1 et la plaque de maintien 13.

Dans ce cas, le produit de remplissage 23 est utilisé pour combler les éventuels décalages de hauteur pouvant être présent lorsque le panneau de GNE 1 est formé d'une pluralité de lamelles 4. Ce mode de réalisation permet d'aplanir la surface du panneau GNE 1 qui est du côté opposé à l'échangeur de chaleur plan 7.

Le produit de remplissage 23 est par exemple formé par broyage et compactage d'un panneau GNE 1 mélangé à une graisse de contact, une graisse thermique ou un mélange d'alliage ou de métal fondant à une température supérieure à celle à laquelle l'échangeur de chaleur plan 7 doit fonctionner.

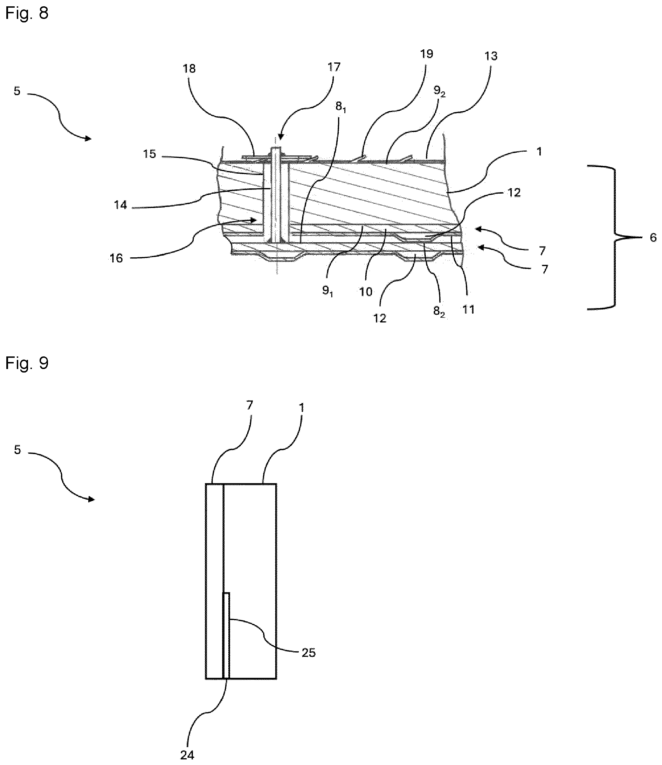

Selon un autre exemple de réalisation d'un dispositif de stockage et d'échange thermique 5 illustré à la figure 8, l'ensemble de stockage et d'échange thermique 6 est muni d'un panneau GNE 1 tel que celui illustré à la figure 1, d'un premier échangeur de chaleur plan 7 et d'un deuxième échangeur de chaleur plan 7.

Un des premier et deuxième échangeurs de chaleur plan 7 comporte au moins un conduit d'acheminement 12 d'un fluide caloporteur agencé pour transmettre la chaleur du conduit d'acheminement vers le panneau GNE 1 et l'autre des échangeurs de chaleur plan 7 comporte au moins un conduit d'acheminement 12 d'un fluide caloporteur agencé pour absorber la chaleur en provenance du panneau GNE 1.

Le deuxième échangeur de chaleur plan 7 possède une première surface d'échange thermique 8₁ au contact d'une deuxième surface d'échange thermique 8₂ du premier échangeur de chaleur plan 7.

Le dispositif de stockage et d'échange thermique 5 comporte en outre une plaque de maintien 13 au contact d'une deuxième surface principale 9₂ du panneau GNE 1.

Autrement dit, le deuxième échangeur de chaleur plan 7 et la première plaque de maintien 13 sont disposés de part et d'autre du premier échangeur de chaleur plan 7 et du panneau GNE 1.

Le dispositif de stockage et d'échange thermique 5 comporte en outre une pluralité de tiges 14 (une seule est représentée) de maintien du panneau GNE 1, des premier et deuxième échangeurs de chaleur plan 7 et de la plaque de maintien 13.

Chaque tige 14 est insérée dans un orifice de maintien 15 traversant l'ensemble 6 et la plaque de maintien 13. Une première extrémité 16 de chacune des tiges 14 est soudée au deuxième échangeur de chaleur plan 7 et une deuxième extrémité 17 de chacune des tiges 14 comporte une tête 18 au contact d'un élément ressort 19, ledit élément ressort 19 étant disposé entre la tête 18 et la plaque de maintien 13.

Selon un exemple de réalisation non limitatif illustré à la figure 9, le dispositif de stockage et d'échange thermique 5 comporte en outre un élément chauffant 24 disposé au contact d'un panneau GNE 1 et d'un échangeur de chaleur plan 7.

Par exemple, l'élément chauffant 24 peut être formé par un film chauffant électrique ou une résistance électrique plate. Ce chauffage électrique est utilisé pour amener de la chaleur au panneau GNE 1 qui stocke la chaleur ou à l'échangeur de chaleur plan 7 pour fournir un appoint de chaleur qui est transmis au fluide caloporteur circulant au sein de l'échangeur de chaleur plan 7.

Une pâte thermique (non illustrée) peut être utilisée pour améliorer le transfert de chaleur provenant de l'élément chauffant 24. Cette pâte thermique peut être disposée entre l'élément chauffant 24 et le panneau GNE 1 ainsi qu'entre l'élément chauffant 24 et l'échangeur de chaleur plan 7. Dans l'exemple illustré, l'élément chauffant 24 est disposé dans un évidement 25 ménagé dans le panneau GNE 1. Dans ce cas, l'évidement 25 peut présenter une épaisseur égale à l'épaisseur de l'élément chauffant 24.

Afin de bénéficier de la convection naturelle du fluide caloporteur dans l'échangeur de chaleur plan 7, ce dernier peut être placé verticalement avec les conduits d'acheminement 12 d'un fluide caloporteur orientés verticalement, et l'élément chauffant 24 placé en partie basse de l'échangeur de chaleur plan 7.

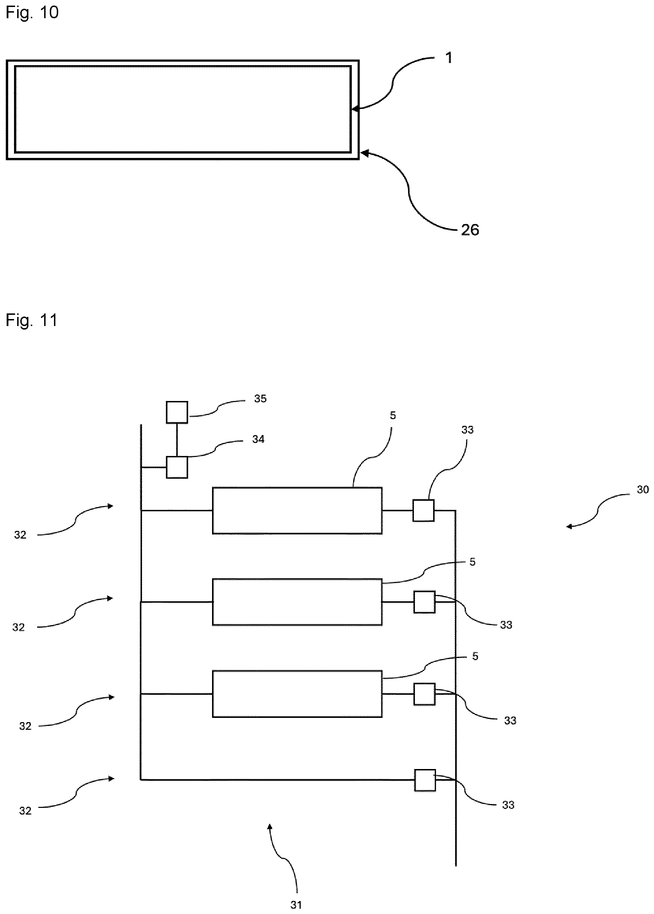

Selon un mode de réalisation non limitatif illustré à la figure 10, au moins un des panneaux GNE 1 est disposé dans une enveloppe 26 sous vide. L'enveloppe 26 est étanche et peut être formée de métal, par exemple d'aluminium, de plastique ou un mélange de plastique et de métal. La paroi de l'enveloppe 26 peut présenter une épaisseur de 0,1 mm.

Selon un mode de réalisation différent non illustré, l'enveloppe 26 peut entourer plusieurs panneaux GNE 1.

Les enveloppes 26 peuvent être placées entre deux tôles dont le pourtour des enveloppes est scellé aux deux tôles par une résine souple ou un caoutchouc. Cet ensemble peut lui-même être mis sous vide.

Le stock peut être constitué de panneaux GNE placés dans des enveloppes sous vide, qui sont elles-mêmes placées entre deux tôles avec un pourtour étanche constituant aussi une enceinte sous vide. Ceci permet d'assurer un meilleur contact thermique entre l'extérieur des tôles et le panneau GNE.

La figure 11 illustre un système de stockage et d'échange thermique 30 comportant un circuit 31 d'acheminement d'un fluide caloporteur. Ce circuit 31 est muni de quatre canalisations 32 connectées en parallèles.

Chaque canalisation 32 est munie d'une électrovanne 33 agencée pour autoriser ou interdire la circulation d'un fluide caloporteur dans la canalisation 32.

Selon ce mode de réalisation, trois des quatre canalisations 32 comporte un dispositif de stockage et d'échange thermique 5 selon l'invention. Les dispositifs de stockage et d'échange thermique 5 sont isolés thermiquement entre eux.

En outre, le système de stockage et d'échange thermique 30 comporte un dispositif de mesure de température 34 d'un fluide caloporteur circulant dans le circuit 31.

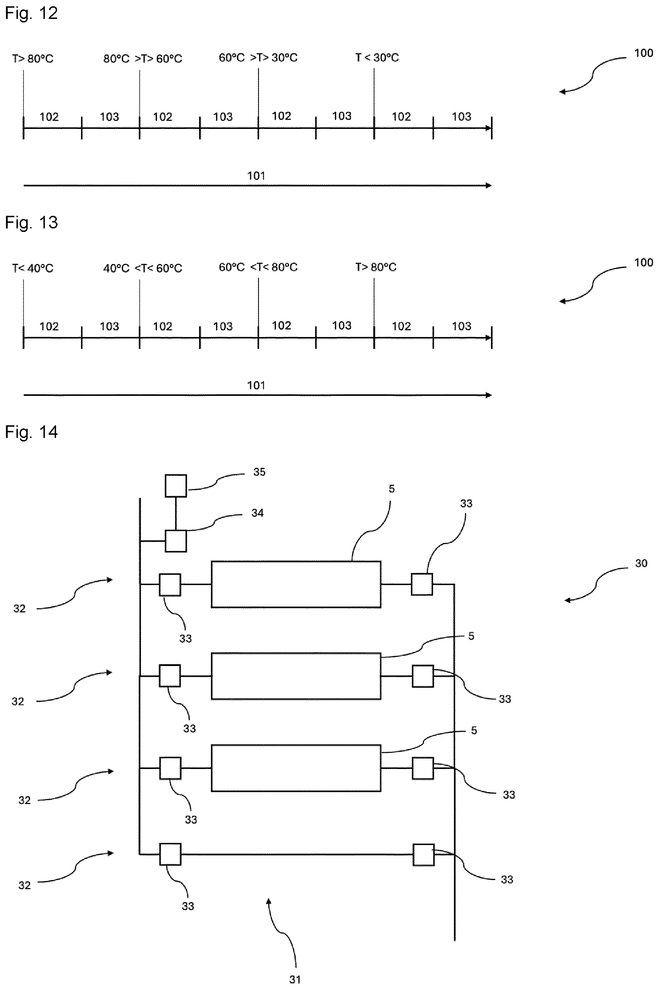

Le système de stockage et d'échange thermique 30 comporte également des moyens de pilotage 35 agencés pour piloter les électrovannes 33 en fonction d'une température du fluide caloporteur mesurée par le dispositif de mesure de température 34.La figure 12 illustre un exemple de mise en œuvre d'un procédé 100 de pilotage d'un système de stockage et d'échange thermique 30 tel que celui illustré à la figure 11 permettant de refroidir le fluide caloporteur par un transfert de chaleur du fluide caloporteur vers les dispositifs de stockage et d'échange thermique 5.

Selon un mode de réalisation non limitatif, le procédé 100 comporte une étape de mesurer 101, au moyen du dispositif de mesure de température 34, la température du fluide caloporteur circulant dans le circuit 31.

Pour un refroidissement du fluide caloporteur circulant dans le circuit 31 se traduisant par une accumulation de chaleur dans les dispositifs de stockage et d'échange thermique 5, lorsque la température T est supérieure à 80°C, le procédé 100 exécute les étapes de
- Piloter 102 l'ouverture, via les moyens de pilotage 35, d'une première électrovanne 33 de sorte à autoriser une circulation du fluide caloporteur dans la canalisation 32 associée à ladite première électrovanne 33 ouverte comportant un dispositif de stockage et d'échange thermique 5, et
- Piloter 103 la fermeture, via les moyens de pilotage 35, des autres électrovannes 33 de sortir à interdire une circulation du fluide caloporteur dans les canalisations 32 associées aux électrovannes 33 fermées.

Puis, lorsque la température T est comprise entre 80°C et 60°C, le procédé 100 exécute les étapes de
- Piloter 102 l'ouverture, via les moyens de pilotage 35, d'une deuxième électrovanne 33 de sorte à autoriser une circulation du fluide caloporteur dans la canalisation 32 associée à ladite deuxième électrovanne 33 ouverte comportant un dispositif de stockage et d'échange thermique 5, et
- Piloter 103 la fermeture, via les moyens de pilotage 35, des autres électrovannes 33 de sortir à interdire une circulation dudit fluide caloporteur dans les canalisations 32 associées aux électrovannes 33 fermées.

Puis, lorsque la température T est comprise entre 60°C et 30°C, le procédé 100 exécute les étapes de
- Piloter 102 l'ouverture, via les moyens de pilotage 35, d'une troisième électrovanne 33 de sorte à autoriser une circulation du fluide caloporteur dans la canalisation 32 associée à ladite troisième électrovanne 33 ouverte comportant un dispositif de stockage et d'échange thermique 5, et
- Piloter 103 la fermeture, via les moyens de pilotage 35, des autres électrovannes 33 de sortir à interdire une circulation dudit fluide caloporteur dans les canalisations 32 associées aux électrovannes 33 fermées.

Finalement, lorsque la température T est inférieure à 30°C, le procédé 100 exécute les étapes de
- Piloter 102 l'ouverture, via les moyens de pilotage 35, d'une quatrième électrovanne 33 de sorte à autoriser une circulation du fluide caloporteur dans la canalisation 32 associée à ladite quatrième électrovanne 33 ouverte ne comportant pas de dispositif de stockage et d'échange thermique 5, et
- Piloter 103 la fermeture, via les moyens de pilotage 35, des autres électrovannes 33 de sortir à interdire une circulation dudit fluide caloporteur dans les canalisations 32 associées aux électrovannes 33 fermées.

La figure 13 illustre un autre exemple de mise en œuvre d'un procédé 100 de pilotage d'un système de stockage et d'échange thermique 30 tel que celui illustré à la figure 11 permettant de chauffer le fluide caloporteur par un transfert de chaleur des dispositifs de stockage et d'échange thermique 5 vers le fluide caloporteur

Selon un mode de réalisation non limitatif, le procédé 100 comporte une étape de mesurer 101, au moyen du dispositif de mesure de température 34, la température du fluide caloporteur circulant dans le circuit 31.

Pour augmenter la température du fluide caloporteur circulant dans le circuit 31 via les dispositifs de stockage et d'échange thermique 5 qui lui cèdent leur chaleur, lorsque la température T est inférieure à 40°C, le procédé 100 exécute les étapes de
- Piloter 102 l'ouverture, via les moyens de pilotage 35, d'une première électrovanne 33 de sorte à autoriser une circulation du fluide caloporteur dans la canalisation 32 associée à ladite première électrovanne 33 ouverte comportant un dispositif de stockage et d'échange thermique 5, et
- Piloter 103 la fermeture, via les moyens de pilotage 35, des autres électrovannes 33 de sortir à interdire une circulation dudit fluide caloporteur dans les canalisations 32 associées aux électrovannes 33 fermées.

Puis, lorsque la température T est comprise entre 40°C et 60°C, le procédé 100 exécute les étapes de
- Piloter 102 l'ouverture, via les moyens de pilotage 35, d'une deuxième électrovanne 33 de sorte à autoriser une circulation du fluide caloporteur dans la canalisation 32 associée à ladite deuxième électrovanne 33 ouverte comportant un dispositif de stockage et d'échange thermique 5, et
- Piloter 103 la fermeture, via les moyens de pilotage 35, des autres électrovannes 33 de sortir à interdire une circulation dudit fluide caloporteur dans les canalisations 32 associées aux électrovannes 33 fermées.

Puis, lorsque la température T est comprise entre 60°C et 80°C, le procédé 100 exécute les étapes de
- Piloter 102 l'ouverture, via les moyens de pilotage 35, d'une troisième électrovanne 33 de sorte à autoriser une circulation du fluide caloporteur dans la canalisation 32 associée à ladite troisième électrovanne 33 ouverte, et
- Piloter 103 la fermeture, via les moyens de pilotage 35, des autres électrovannes 33 de sortir à interdire une circulation dudit fluide caloporteur dans les canalisations 32 associées aux électrovannes 33 fermées.

Finalement, lorsque la température T est supérieure à 80°C, le procédé 100 exécute les étapes de
- Piloter 102 l'ouverture, via les moyens de pilotage 35, d'une quatrième électrovanne 33 de sorte à autoriser une circulation du fluide caloporteur dans la canalisation 32 associée à ladite quatrième électrovanne 33 ouverte ne comportant pas de dispositif de stockage et d'échange thermique 5, et
- Piloter 103 la fermeture, via les moyens de pilotage 35, des autres électrovannes 33 de sortir à interdire une circulation dudit fluide caloporteur dans les canalisations 32 associées aux électrovannes 33 fermées.

La figure 14 illustre un autre exemple de réalisation d'un système de stockage et d'échange thermique 30 selon l'invention.

Ce système de stockage et d'échange thermique 30 comporte un circuit 31 d'acheminement d'un fluide caloporteur. Ce circuit 31 est muni de quatre canalisations 32 connectées en parallèles.

Chaque canalisation 32 est munie de deux électrovanne 33 disposées en entrée et en sortie de la canalisation 32, les deux électrovannes 33 formant un couple d'électrovannes 33. Chaque couple d'électrovannes 33 est agencé pour autoriser ou interdire la circulation d'un fluide caloporteur dans la canalisation 32 associée à ce couple d'électrovannes 33.

Selon ce mode de réalisation, trois des quatre canalisations 32 comportent un dispositif de stockage et d'échange thermique 5 selon l'invention. Les dispositifs de stockage et d'échange thermique 5 sont isolés thermiquement entre eux.

En outre, le système de stockage et d'échange thermique 30 comporte un dispositif de mesure de température 34 d'un fluide caloporteur circulant dans le circuit 31.

Le système de stockage et d'échange thermique 30 comporte également des moyens de pilotage 35 agencés pour piloter les électrovannes 33 en fonction d'une température du fluide caloporteur mesurée par le dispositif de mesure de température 34.

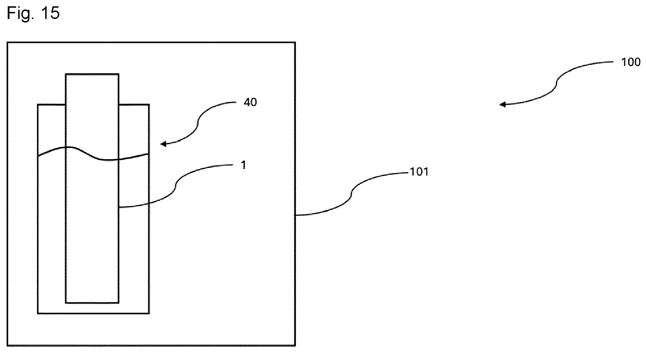

La figure 15 illustre une méthode 200 d'imprégnation d'un panneau GNE 1. Cette méthode 200 comporte une étape d'imprégnation 201 du panneau GNE 1 au cours de laquelle le panneau GNE 1 est placé verticalement dans un bain 40 de matériau à changement de phase en phase liquide. L'extrémité supérieure du panneau de GNE 1 émerge du bain 40 lors de l'étape d'imprégnation. La méthode 200 d'imprégnation selon l'invention consiste donc à positionner verticalement le panneau GNE 1 dans le liquide d'imprégnation tout en laissant un côté ou une partie d'un côté du panneau GNE 1 à l'air libre de façon à favoriser l'évacuation de l'air durant l'imprégnation.

## Revendications

1. Panneau de graphite expansé et compressé (1), dit panneau GNE, pour le stockage d'énergie thermique, ledit panneau GNE (1) étant imprégné d'un matériau à changement de phase, ledit panneau GNE (1) étant **caractérisé en ce qu'**il comporte une pluralité d'orifices d'imprégnation (2) pour l'entrée dudit matériau à changement de phase durant une imprégnation en phase liquide dudit matériau à changement de phase, chaque orifice d'imprégnation (2) présentant un axe longitudinal (X) perpendiculaire à un plan de compression (P) dudit panneau GNE (1).

2. Dispositif de stockage et d'échange thermique (5) comportant un ensemble de stockage et d'échange thermique (6) muni :
∘ D'un premier panneau GNE (1) selon la revendication précédente ;
o D'un premier échangeur de chaleur plan (7) ayant une première surface d'échange thermique (8₁) au contact d'une première surface principale (9₁) dudit panneau GNE (1).

3. Dispositif (5) selon la revendication précédente, **caractérisé en ce qu'**il comporte :
- Une première plaque de maintien (13) au contact d'une deuxième surface principale (9₂) du premier panneau GNE (1) parallèle à la première surface principale (9₁) ;
- une pluralité de tiges (14), chaque tige (14) étant insérée dans un orifice de maintien (15) traversant l'ensemble de stockage et d'échange thermique (6) et la première plaque de maintien (13), une première extrémité (16) de chacune desdites tiges (14) étant soudée au premier échangeur de chaleur plan (7) et une deuxième extrémité (17) de chacune desdites tiges (14) comportant une tête (18) au contact d'un élément ressort (19), ledit élément ressort (19) étant disposé entre ladite tête (18) et ladite première plaque de maintien (13).

4. Dispositif (5) selon la revendication précédente, **caractérisé en ce que** la première plaque de maintien (13) est formée par un deuxième échangeur de chaleur plan (7).

5. Dispositif (5) selon la revendication 2, **caractérisé en ce que** l'ensemble de stockage et d'échange thermique (6) comporte en outre un deuxième panneau GNE (1), le premier échangeur de chaleur plan (7) ayant une deuxième surface d'échange thermique (8₂) au contact d'une première surface principale (9₁) dudit deuxième panneau GNE (1) parallèle à la première surface principale (9₁) du premier panneau GNE (1), ledit dispositif (5) comportant en outre :
- Une première plaque de maintien (13) au contact d'une deuxième surface principale (9₂) du premier panneau GNE (1) parallèle à la première surface principale (9₁) du premier panneau GNE (1) ;
- Une deuxième plaque de maintien (13) au contact d'une deuxième surface principale (9₂) du deuxième panneau GNE (1) parallèle à la première surface principale (9₁) du deuxième panneau GNE (1) ;
- une pluralité de tiges (14), chaque tige (14) étant insérée dans un orifice de maintien (15) traversant l'ensemble de stockage et d'échange thermique (6) ainsi que les première et deuxième plaques de maintien (13), une première extrémité (16) de chacune desdites tiges (14) étant soudée à ladite deuxième plaque métallique (13) et une deuxième extrémité (17) de chacune desdites tiges (14) comportant une tête (18) au contact d'un élément ressort (19), ledit élément ressort (19) étant disposé entre ladite tête (18) et ladite première plaque de maintien (13).

6. Dispositif (5) selon la revendication 2, **caractérisé en ce que** l'ensemble de stockage et d'échange thermique (6) comporte en outre un deuxième échangeur de chaleur plan (7) ayant une première surface d'échange thermique (8₁) au contact d'une deuxième surface d'échange thermique (8₂) du premier échangeur de chaleur plan (7), ledit dispositif (5) comportant en outre :
- Une première plaque de maintien (13) au contact d'une deuxième surface principale (9₂) du premier panneau GNE (1) parallèle à la première surface principale (9₁) du premier panneau GNE (1) ;
- une pluralité de tiges (14), chaque tige (14) étant insérée dans un orifice de maintien (15) traversant l'ensemble de stockage et d'échange thermique (6) et la première plaque de maintien (13), une première extrémité (16) de chacune desdites tiges (14) étant soudée au deuxième échangeur de chaleur plan (7) et une deuxième extrémité (17) de chacune desdites tiges (14) comportant une tête (18) au contact d'un élément ressort (19), ledit élément ressort (19) étant disposé entre ladite tête (18) et ladite première plaque de maintien (13).

7. Dispositif (5) selon l'une quelconque des revendications 3 à 6, **caractérisé en ce que** chaque orifice de maintien (15) est ménagé dans une lamelle (4) dont le plan de compression (P) est perpendiculaire à l'axe longitudinal (X) dudit orifice de maintien (15).

8. Dispositif (5) selon l'une quelconque des revendications 2 à 7, **caractérisé en ce que** chaque échangeur de chaleur plan (7) est formé d'une plaque plane d'échange thermique (10) et d'une plaque embossée d'échange thermique (11) posées l'une sur l'autre et formant entre elles au moins un conduit (12) d'acheminement d'un fluide caloporteur.

9. Dispositif (5) selon la revendication précédente, **caractérisé en ce qu'**un produit de remplissage (23) présentant une conductivité thermique supérieure à 6W/m/K est disposé entre :
- Un panneau GNE (1) et un échangeur de chaleur plan (7) ; et/ou
- Un panneau de GNE (1) et une plaque de maintien (13).

10. Dispositif (5) selon la revendication précédente, **caractérisé en ce que** le produit de remplissage (23) est formé par broyage et compactage d'un panneau GNE (1) mélangé à :
a. Une graisse de contact ;
b. Une graisse thermique ;
c. Un mélange d'alliage ; ou
d. Un mélange de métal.

11. Dispositif (5) selon l'une quelconque des revendications 2 à 10, **caractérisé en ce qu'**il comporte un élément chauffant (24) disposé au contact d'un panneau GNE (1) ou d'un panneau GNE (1) et d'un échangeur de chaleur plan (7).

12. Dispositif (5) selon l'une quelconque des revendications 2 à 11, **caractérisé en ce qu'**au moins un panneau GNE (1) est disposé dans une enveloppe sous vide.

13. Système de stockage et d'échange thermique (30) comportant :
a. Un circuit (31) d'acheminement d'un fluide caloporteur muni d'au moins deux canalisations (32) connectées en parallèles, chaque canalisation (32) étant munie d'une électrovanne (33) agencée pour autoriser ou interdire la circulation d'un fluide caloporteur dans ladite canalisation (32), une desdites au moins deux canalisations (32) comportant un dispositif de stockage et d'échange thermique (5) selon l'une quelconque 2 à 12 ;
b. Un dispositif de mesure de température (34) d'un fluide caloporteur circulant dans ledit circuit (31) ;
c. Des moyens de pilotage (35), lesdits moyens de pilotage (35) étant agencés pour piloter lesdites électrovannes (33) en fonction d'une température dudit fluide caloporteur mesurée par ledit dispositif de mesure de température (34).

14. Procédé (100) de pilotage d'un système de stockage et d'échange thermique (30) selon la revendication précédente, ledit procédé (100) étant **caractérisé en ce qu'**il comporte les étapes de :
a. Mesurer (101), au moyen du dispositif de mesure de température (34), la température du fluide caloporteur ;
b. En fonction de la température du fluide caloporteur mesurée,
i. Piloter (102) l'ouverture, via les moyens de pilotage (35), d'une ou deux électrovanne (33) d'une canalisation (32) de sorte à autoriser une circulation du fluide caloporteur dans la canalisation (32) associée à ladite ou lesdites électrovanne(s) ouverte(s) (33), et
ii. Piloter (103) la fermeture, via les moyens de pilotage (35), d'une ou deux électrovannes (33) d'une autre canalisation (32) de sorte à interdire une circulation dudit fluide caloporteur dans ladite autre canalisation (32) associée à ladite ou lesdites électrovanne(s) (33) fermée(s).

15. Méthode (200) d'imprégnation d'un panneau GNE (1) selon la revendication 1, ladite méthode (200) comportant une étape d'imprégnation (201) dudit panneau GNE (1) dans laquelle ledit panneau GNE (1) est placé verticalement dans un bain (40) de matériau à changement de phase en phase liquide, une extrémité dudit panneau GNE (1) émergeant dudit bain (40) lors de ladite étape d'imprégnation.
